# EUROPÄISCHE PATENTSCHRIFT

(11) **EP 1 204 545 B1**
(45) Veröffentlichungstag und Bekanntmachung des Hinweises auf die Patenterteilung: **20.10.2004**
(21) Anmeldenummer: 00920533.7
(22) Anmeldetag: 22.03.2000
(51) Int. Cl.: B60R 21/20, B60R 21/22, B60R 21/16

(54) **AIRBAG-VORRICHTUNG**
AIRBAG DEVICE
ENSEMBLE AIRBAG

(30) Priorität: 29.04.1999 DE 19919666
(43) Veröffentlichungstag der Anmeldung: 15.05.2002
(73) Patentinhaber: Volkswagen Aktiengesellschaft, 38436 Wolfsburg (DE)
(72) Erfinder: WELSCH, Frank, D-38179 Schwülper (DE)
(74) Vertreter: Liebl, Thomas, Dipl.-Ing.
(86) Internationale Anmeldenummer: PCT/EP2000/002522
(87) Internationale Veröffentlichungsnummer: WO 2000/066401

(56) Entgegenhaltungen:
- WO-A-98/24661
- DE-A- 19 704 051
- DE-A- 19 841 347
- GB-A- 2 293 355
- US-A- 5 772 238

## Beschreibung

Die vorliegende Erfindung betrifft eine Airbag-Vorrichtung mit einem Airbag-Gehäuse zur Aufnahme eines aktivierbaren, im nicht aktivierten Zustand zusammengefalteten Airbags, das entlang eines quer zur Längsrichtung eines Fahrzeugs gekrümmten Karosseriebereichs angeordnet ist.

Eine Airbag-Vorrichtung der eingangs genannten Art ist beispielsweise durch die DE-OS 197 26 782 A1 bekanntgeworden.

Die bekannte Airbag-Vorrichtung weist ein Airbag-Gehäuse mit einer länglichen Form und einem rechteckigen Querschnitt auf. Das Airbag-Gehäuse ist zwischen einem Innenblech in der Dachseite und einer vorderen Säule und einer Verkleidung angeordnet. Beim Einbau der Airbag-Vorrichtung muß einerseits darauf geachtet werden, daß die im Airbag-Gehäuse ausgebildete Austrittsöffnung für einen aktivierten Airbag entsprechend ausgerichtet ist, um einen optimalen Aufprallschutzes des Fahrzeuginsassen zu gewährleisten. Andererseits ergeben sich auf Grund der rechteckigen Querschnittsform Schwierigkeiten bei der platzsparenden Unterbringung der Airbag-Vorrichtung zwischen einer Innenverkleidung der Fahrzeugkarosserie und den Karosseriebauteilen. Als Kompromiß werden daher meist Veränderungen an den Karosseriebauteilen (Einbuchtungen oder Ausprägungen an der Säule, usw.) vorgenommen, die zu einer Herabsetzung der Festigkeit der Säule führen können und wieder durch zusätzliche Karosserie-Änderungen (Verstärkungen oder Versteifungen) ausgeglichen werden müssen.

Eine in der DE-OS 197 52 989 A1 beschriebene Airbag-Vorrichtung weist ebenfalls ein Airbag-Gehäuse mit einer rechteckigen Querschnittsform auf, so daß sich bei Verwendung dieses Airbag-Gehäuse analoge Probleme zu der vorgenannten Airbag-Vorrichtung ergeben.

Der vorliegenden Erfindung liegt daher die Aufgabe zugrunde, eine Airbag-Vorrichtung mit einem Airbag-Gehäuse zu entwickeln, das besser an die Erfordernisse des Karosseriebaus angepaßt ist, ohne die Funktionsweise der Airbag-Vorrichtung zu beeinträchtigen.

Diese Aufgabe wird erfindungsgemäß durch eine Airbag-Vorrichtung mit einem Airbag-Gehäuse zur Aufnahme eines aktivierbaren, im nicht aktivierten Zustand zusammengefalteten Airbags gelöst, das entlang eines quer zur Längsrichtung eines Fahrzeugs gekrümmten Karosseriebereichs angeordnet ist und eine quer zur Längsrichtung des Fahrzeugs gesehene, an die Krümmung des Karosseriebereichs angepaßte Querschnittsform aufweist.

Die Querschnittsform kann "bananenförmig" oder ähnlich ausgebildet sein. Derartige Airbag-Gehäuse können sich gut an die durch die Fahrzeugkarosserie vorgegebene Kontur anpassen, so daß das Airbag-Gehäuse platzsparend untergebracht werden kann, ohne Veränderungen an der Fahrzeugkarosserie vornehmen zu müssen. Die Schaffung von Hohlräumen in der Fahrzeugkarosserie kann entfallen. Die am Airbag-Gehäuse ausgebildete Austrittsöffnung für den Airbag kann so gewählt werden, daß dieser zwischen Fahrzeugkarosserie und Fahrzeuginsasse austritt und diesen optimal schützt.

Bei einer bevorzugten Ausführungsform ist die Airbag-Vorrichtung als Kopfaufprallschutz des Fahrzeuginsassen vorgesehen. Das Airbag-Gehäuse ist an die Querschnittsgeometrie der sog. C-Säule der Fahrzeugkarosserie und/oder die Innenkontur des Fahrzeugdachs angepaßt. Beim Einbau der Airbag-Vorrichtung in diesem Fahrzeugbereich erweist sich die Querschnittsgeometrie des Airbag-Gehäuses als besonders vorteilhaft, weil es dort besonders wichtig ist, eine Schwächung der C-Säule zu vermeiden und eine ausgleichende Verstärkung einer Einbuchtungen aufweisenden C-Säule nur bedingt möglich ist.

Die Austrittsöffnung für einen Austritt des aktivierten Airbags aus dem Airbag-Gehäuse läßt sich bei einer anderen Airbag-Vorrichtung derart ausrichten, daß der Austritt des aktivierten Airbags parallel zur Fensterfläche erfolgt. Dies trägt dazu bei, daß der Fahrzeuginsasse bei einem Fahrzeugunfall möglichst gut vor einem Aufprall auf harte Fahrzeugkarosserieteile geschützt wird.

Die Airbag-Vorrichtung ist auch als Seitenaufprallschutz des Fahrzeuginsassen einsetzbar, wenn das Airbag-Gehäuse an die Querschnittsgeometrie der Fahrzeugtür angepaßt ist.

Ein Ausführungsbeispiel der erfindungsgemäßen Airbag-Vorrichtung ist in der schematischen Zeichnung dargestellt und wird in der nachfolgenden Beschreibung erläutert.

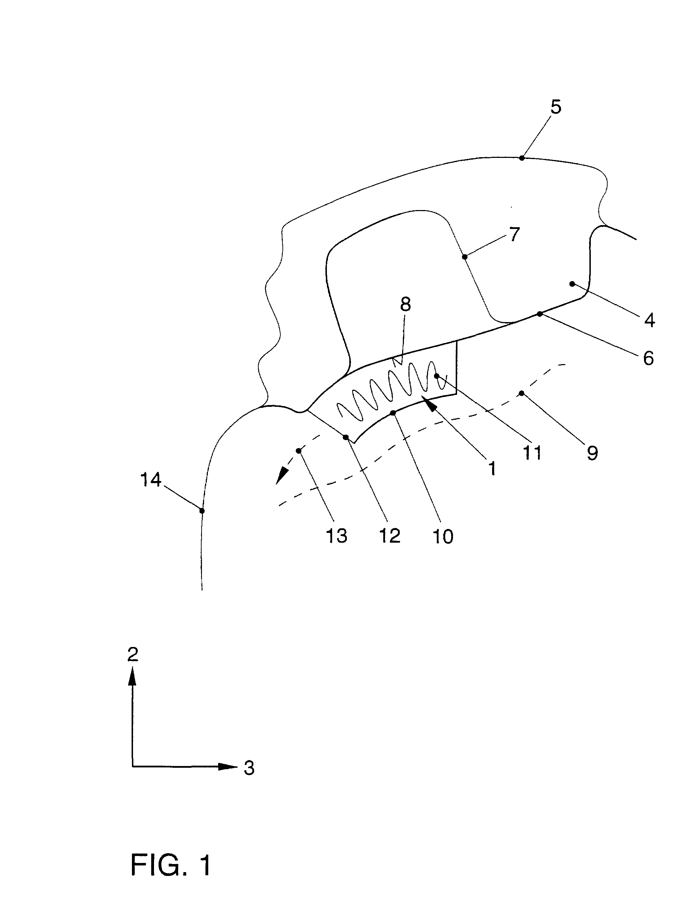

### Die Figur zeigt eine Airbag-Vorrichtung im Querschnitt.

Der Schnitt durch Teile einer Fahrzeugkarosserie und durch eine Airbag-Vorrichtung 1 wurde quer zur Längsrichtung der Fahrzeugkarosserie durchgeführt. Pfeil 2 bezeichnet die Richtung zur Fahrzeugoberseite und Pfeil 3 bezeichnet die Richtung zum Fahrzeuginnenraum. Eine Säule 4 der Fahrzeugkarosserie setzt sich aus einem äußeren Seitenteil 5 und einem inneren Seitenteil 6 zusammen. Zusätzlich wird die Festigkeit der Säule 4 durch eine Verstärkung 7 erhöht. Zum Innenraum des Fahrzeugs hin ist eine Fläche 8 der Säule 4 gekrümmt ausgebildet und durch eine in der Figur lediglich angedeutete Verkleidung 9 abgedeckt, so daß diese Karosserieteile nicht direkt sichtbar sind. Das Airbag-Gehäuse 10 weist eine gekrümmte Querschnittsform auf, die der Krümmung der Fläche 8 des Seitenteils 6 nachgebildet ist. Bei der Konstruktion und Fertigung eines Fahrzeugs kann daher zunächst eine hinsichtlich Form und Festigkeit bestmögliche Säule 4 ausgebildet werden, an welche die Querschnittsform des Airbag-Gehäuses 10 angepaßt ist, ohne nachträgliche Veränderungen der Säule 4, wie Einbuchtungen, Ausnehmungen etc. vornehmen zu müssen. Innerhalb des Airbag-Gehäuses 10 befindet sich der zusammengefaltete, nicht aktivierte Airbag 11. Bei einer Aktivierung des Airbags 11 in Folge eines Fahrzeugunfalls wird dieser aufgeblasen und tritt über eine Austrittsöffnung 12 aus dem Airbag-Gehäuse 10 in Austrittsrichtung 13 aus. Der aufgeblasene Airbag 11 erstreckt sich dann parallel zu einer in der Figur angedeuteten Fensterscheibe 14.

### BEZUGSZEICHENLISTE

- 1: Airbag-Vorrichtung
- 2: Richtung zur Fahrzeugoberseite
- 3: Richtung zum Fahrzeuginnenraum
- 4: Säule
- 5: Äußeres Seitenteil
- 6: Inneres Seitenteil
- 7: Verstärkung
- 8: Fläche
- 9: Verkleidung
- 10: Airbag-Gehäuse
- 11: Airbag
- 12: Austrittsöffnung
- 13: Austrittsrichtung
- 14: Fensterscheibe

## Patentansprüche

1. Airbag-Vorrichtung (1) mit einem Airbag-Gehäuse (10) zur Aufnahme eines aktivierbaren, im nicht aktivierten Zustand zusammengefalteten Airbags (11), das entlang eines quer zur Längsrichtung eines Fahrzeugs gekrümmten Karosseriebereichs angeordnet ist, **dadurch gekennzeichnet, daß** das Airbag-Gehäuse (10) eine quer zur Längsrichtung des Fahrzeugs gesehene, an die Krümmung des Karosseriebereichs angepaßte Querschnittsform aufweist.

2. Airbag-Vorrichtung nach Anspruch 1, **dadurch gekennzeichnet, daß** die Querschnittsform "bananenförmig" ausgebildet ist.

3. Airbag-Vorrichtung nach Anspruch 1 oder 2, **dadurch gekennzeichnet, daß** die Airbag-Vorrichtung (1) als Kopfaufprallschutz des Fahrzeuginsassen vorgesehen ist, und daß das Airbag-Gehäuse (10) an die Querschnittsgeometrie der sog. C-Säule (4) der Fahrzeugkarosserie und/oder die Innenkontur des Fahrzeugdachs angepaßt ist.

4. Airbag-Vorrichtung nach Anspruch 3, **dadurch gekennzeichnet, daß** die Austrittsöffnung (12) für einen Austritt des aktivierten Airbags (11) aus dem Airbag-Gehäuse (10) derart ausgerichtet ist, daß der Austritt des aktivierten Airbags (11) parallel zur Fensterfläche erfolgt.

5. Airbag-Vorrichtung nach Anspruch 1 oder 2, **dadurch gekennzeichnet, daß** die Airbag-Vorrichtung als Seitenaufprallschutz des Fahrzeuginsassen vorgesehen ist, und daß das Airbag-Gehäuse an die Querschnittsgeometrie der Fahrzeugtür angepaßt ist.

## Claims

1. Airbag device (1) having an airbag housing (10) for accommodating an airbag (11) which can be activated, is folded together in the non-activated state and is arranged along a body region which is curved transversely with respect to the longitudinal direction of a vehicle, **characterized in that** the airbag housing (10) has a cross-sectional shape which is seen transversely with respect to the longitudinal direction of the vehicle and is matched to the curvature of the body region.

2. Airbag device according to Claim 1, **characterized in that** the cross-sectional shape is of "banana-shaped" design.

3. Airbag device according to Claim 1 or 2, **characterized in that** the airbag device (1) is provided as head impact protection of the vehicle occupant, and **in that** the airbag housing (10) is matched to the cross-sectional geometry of the "C-pillar" (4) of the vehicle body and/or the inner contour of the vehicle roof.

4. Airbag device according to Claim 3, **characterized in that** the outlet opening (12) for the activated airbag (11) to emerge from the airbag housing (10) is orientated in such a manner that the activated airbag (11) emerges parallel to the window surface.

5. Airbag device according to Claim 1 or 2, **characterized in that** the airbag device is provided as side impact protection for the vehicle occupant, and **in that** the airbag housing is matched to the cross-sectional geometry of the vehicle door.

## Revendications

1. Ensemble d'airbag (1) comprenant un boîtier d'airbag (10) destiné à recevoir un airbag (11) activable, plié dans l'état non activé, qui est disposé le long d'une région de la carrosserie courbée transversalement par rapport à la direction longitudinale d'un véhicule, **caractérisé en ce que** le boîtier d'airbag (10) présente une forme en section transversale adaptée à la courbure de la région de la carrosserie, vue transversalement par rapport à la direction longitudinale du véhicule.

2. Ensemble d'airbag selon la revendication 1, **caractérisé en ce que** la forme en section transversale est réalisée en "forme de banane".

3. Ensemble d'airbag selon la revendication 1 ou 2, **caractérisé en ce que** l'ensemble d'airbag (1) est prévu en tant que protection contre les chocs au niveau de la tête de l'occupant du véhicule, et **en ce que** le boîtier d'airbag (10) est adapté à la géométrie en section transversale du montant de custode (4) de la carrosserie du véhicule et/ou au contour interne du toit du véhicule.

4. Ensemble d'airbag selon la revendication 3, **caractérisé en ce que** l'ouverture de sortie (12) pour une sortie de l'airbag activé (11) hors du boîtier d'airbag (10) est orientée de telle sorte que la sortie de l'airbag activé (11) s'effectue parallèlement à la surface de la vitre.

5. Ensemble d'airbag selon la revendication 1 ou 2, **caractérisé en ce que** l'ensemble d'airbag est prévu en tant que protection contre les chocs latéraux de l'occupant du véhicule, et **en ce que** le boîtier d'airbag est adapté à la géométrie en section transversale de la porte du véhicule.
